Europäisches Patentamt

European Patent Office

Office européen des brevets

(11) Numéro de publication: **0 429 356 A1**

# (12) DEMANDE DE BREVET EUROPEEN

(21) Numéro de dépôt: 90403279.4

(22) Date de dépôt: 21.11.90

(51) Int. Cl.⁵: **B60P 7/04**, B60J 7/06

(30) Priorité: 22.11.89 FR 8915364

(43) Date de publication de la demande:
29.05.91 Bulletin 91/22

(84) Etats contractants désignés:
AT BE CH DE DK ES GB GR IT LI LU NL SE

(71) Demandeur: SOCIETE D' EXPLOITATION DES CARROSSERIES JOSEPH LIBNER
Saint Lin
F-79420 Reffannes(FR)

(72) Inventeur: Libner, Joseph Casimir
Saint-Lin
F-79420 Reffannes(FR)

(74) Mandataire: CABINET BONNET-THIRION
95 Boulevard Beaumarchais
F-75003 Paris(FR)

(54) Véhicule de transport couvert par bâche.

(57) Armature de bâche à poutres longitudinales mobiles.

Selon l'invention, l'armature de bâche (15), qui comporte deux poutres longitudinales (19, 20) et deux traverses d'extrémité (22, 23), à chacune des poutres équipée de deux supports mobiles (25, 26) formant chariots, se déplaçant le long des traverses grâce à un arbre (38 ou 39) muni de deux pignons (42 ou 43) en prise avec des crémaillères (45, 46) solidaires des traverses.

Application à un véhicule de transport.

FIG.1

## VÉHICULE DE TRANSPORT COUVERT PAR BÂCHE

L'invention se rapporte à un véhicule de transport couvert par bâche, tel que par exemple une remorque de camion, elle concerne plus particulièrement un perfectionnement permettant de dégager complètement le plateau de transport d'un tel véhicule, notamment pour effectuer les chargements et déchargements à l'aide d'une grue ou moyen de levage analogue et sans qu'il soit nécessaire de manoeuvrer le véhicule pour l'orienter d'une façon particulière par rapport à l'infrastructure de chargement-déchargement.

La demande de brevet français N 87.15 069 décrit un véhicule de transport couvert par bâche, dont l'armature de bache est agencée pour dégager le plateau de transport. Cette armature comprend un support de toit remarquable en ce que l'une des poutres longitudinales dudit support est montée avec possibilité de déplacement le long des traverses avant et arrière, pour pouvoir déplacer ladite outre dans la direction de l'autre. Cet agencement permet de dégager le plateau pour qu'il devienne accessible par le haut et sur toute la longueur d'un côté.

Le mode de réalisation plus spécifiquement décrit dans le document cité ci-dessus comporte une poutre longitudinale dont les extrémités sont solidaires de supports mobiles respectifs, formant chariots, assujettis à se déplacer dans des rails creux formant les traverses. La poutre est ainsi déplaçable en direction de l'autre. Le déplacement des chariots est assuré par un système de pignons et chaînes, agencé dans la partie fixe du support de toit. Pour éviter des manoeuvres inutiles, voire délicates, sur le site de chargement ou déchargement, il est apparu souhaitable que les deux poutres du support de toit soient déplaçables. Il faudrait ainsi doubler le système de pignons et chaînes décrit, dans le document mentionné ci-dessus.

L'invention propose un autre système de déplacement des deux poutres, présentant des éléments de structure communs pour ces deux poutres.

Dans cet esprit, l'invention concerne donc un véhicule de transport comportant une armature de bâche pour former un espace couvert, cette armature comprenant notamment un support de toit muni de deux poutres longitudinales parallèles et de deux traverses d'extrémité, respectivement avant et arrière, caractérisé en ce que les deux poutres longitudinales sont montées avec possibilité de déplacement le long desdites traverses en restant parallèles à elles-mêmes, en ce que chaque poutre comporte à cet effet, à chacune de ses extrémités, un support mobile formant chariot ou analogue, assujetti à se déplacer dans un rail creux de la traverse correspondante, en ce que chaque poutre comporte un arbre d'actionnement longitudinal, couplé à des moyens d'entraînement en rotation, muni de deux pignons au voisinage de ses extrémités et en ce que les pignons des extrémités des deux arbres situés du côté d'une même traverse d'extrémité sont en prise avec une même crémaillère transversale solidaire de cette traverse.

L'entraînement de chaque arbre longitudinal peut être assuré par une transmission mécanique à manivelle. Un tel mécanisme d'entraînement manuel comprend, par exemple, un réducteur installé à l'extrémité de la poutre et une tringlerie d'entraînement télescopique reliant ledit réducteur à un ensemble de pignons et manivelle, situé en partie basse du véhicule, a hauteur d'homme.

Dans une version automatisée, l'arbre d'actionnement de chaque poutre peut être couple à un moteur hydraulique installé à l'extrémité de la poutre et alimenté en fluide hydraulique par des conduits flexibles reliés à une centrale hydraulique.

Enfin, il est a noter que l'agencement qui vient d'être décrit est particulièrement adapté pour être équipé d'un enrouleur de bâche latérale, système connu en soi, ledit enrouleur étant logé dans un élément profilé de ladite poutre longitudinale, ouvert latéralement vers l'extérieur.

L'invention sera mieux comprise et d'autres avantages de celle-ci apparaîtront plus clairement à la lumière de la description qui va suivre, donnée uniquement à titre d'exemple et faite en référence aux dessins annexés dans lesquels:

- la figure 1 est une vue partielle en perspective d'un véhicule de transport conforme à l'invention, constituant ici une remorque de camion et montrant plus particulièrement le support de toit de l'armature de bache;
- la figure 2 est une vue schématique d'une extrémité de ce véhicule et illustrant en outre une variante à actionnement manuel;
- la figure 3 est une vue de détail en perspective, à plus grande échelle, de l'encadré III de la figure 1;
- la figure 4 est une vue de détail en perspective, analogue à la figure 3, de l'encadré IV de la figure 1; et
- la figure 5 est une vue de détail en perspective, analogue à la figure 3, de l'encadré V de la figure 1.

Sur les dessins, on a représenté une remorque de camion 11 dont les éléments sont un plateau de transport 12 monté sur un châssis roulant, une paroi transversale avant 13, une paroi transversale arrière 14 et une armature de bache 15, métallique, s'étendant entre les deux parois avant et arrière 13, 14. L'armature métallique 15 est composée de montants latéraux (non représentés) s'étendant verticalement le long des côtés longitudinaux du plateau 12 et d'un support de toit 17. Ce dernier est conformé pour définir un toit à deux pentes faiblement inclinées. Les deux faces latérales longitudinales sont, dans l'exemple, fermées par des bâches montées sur enrouleurs, c'est-à-dire susceptibles de s'enrouler sur des arbres horizontaux 18 logés et maintenus dans des profilés en C faisant partie des poutres longitudinales 19, 20 du support de toit 17. Un tel système à enrouleur est connu en soi. Le support de toit 17 est soutenu par les deux parois 13, 14 et les montants latéraux mentionnés ci-dessus. Ceux-ci peuvent être du même type que ceux qui sont décrits dans la demande de brevet français N° 86.03 335, c'est-à-dire montés avec possibilité d'être déplacés le long des poutres longitudinales, 19, 20, du support de toit. De tels montants peuvent ainsi être regroupés à une extrémité du véhicule pendant les opérations de chargement-déchargement. Ils peuvent aussi tout simplement être démontables. L'ensemble de l'armature et des bâches (lesquelles ne sont pas représentées sur les dessins) définit ainsi un espace couvert au-dessus du plateau 12. Lorsque la remorque est en situation de transporter des marchandises, les poutres 19 et 20, horizontales et parallèles, sont écartées l'une de l'autre de façon à être situées sensiblement au-dessus des bords longitudinaux du plateau 12, respectivement. Ces poutres s'étendent entre les parois transversales avant et arrière 13, 14 lesquelles portent des traverses d'extrémité horizontales du support de toit, respectivement une traverse d'extrémité avant 22 et une traverse d'extrémité arrière 23.

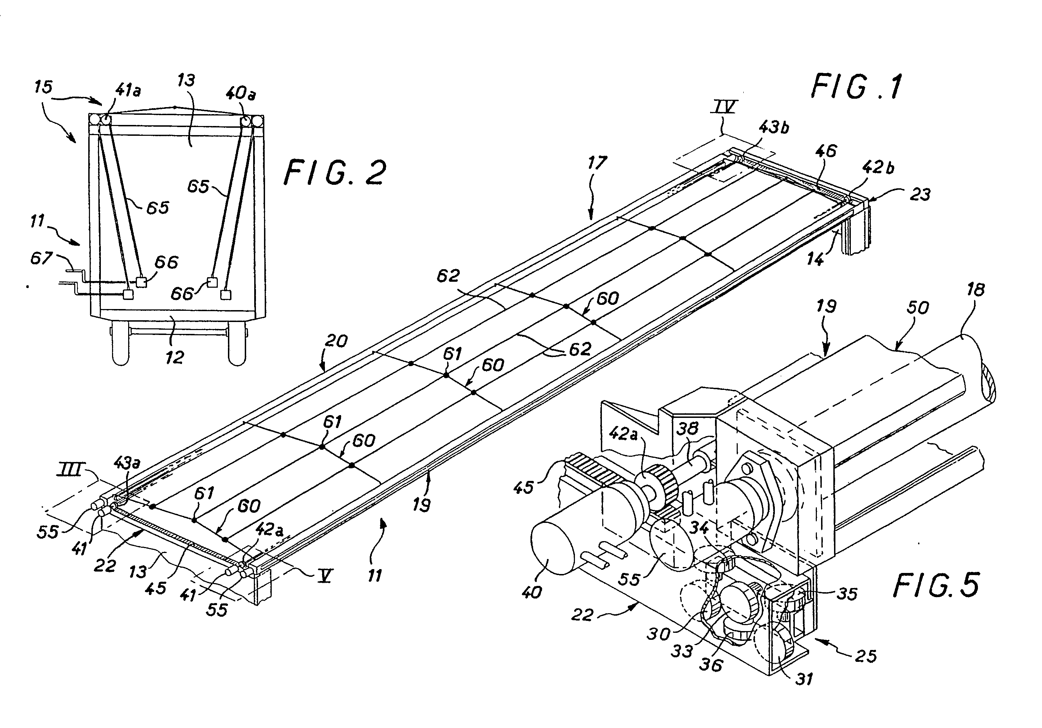

Selon l'invention, les deux poutres longitudinales 19, 20 sont montées avec possibilité de déplacement le long des traverses 22, 23, chaque poutre restant parallèle à elle-même pendant son déplacement. Pour ce faire, chaque traverse d'extrémité 22, 23 a la forme d'un rail creux ayant une structure de profilé métallique sensiblement en forme de C. Chaque poutre 19, 20 est munie, à ses deux extrémités, de supports mobiles 25, 26 formant chariots. Les supports mobiles 25 sont assujettis à se déplacer dans la traverse 22 tandis que les supports mobiles 26 sont assujettis à se déplacer dans la traverse 23. Chaque support mobile, engagé dans une telle traverse formant rail, comporte des galets coopérant avec les parois internes de cette traverse. On distingue plus particulièrement, pour chaque support mobile, deux galets verticaux inférieurs 30, 31 roulant sur une face horizontale inferieure de l'intérieur du rail, un galet vertical supérieur 33 venant rouler sur une face horizontale supérieure de l'intérieur du rail, deux galets horizontaux 34, 35, venant rouler sur l'une ou l'autre de deux faces verticales opposées du rail et un galet horizontal inférieur 36 venant rouler sur une face verticale de ce même rail. L'agencement général des éléments du chariot et plus particulièrement de ses galets est une variante de celui qui est décrit dans la demande de brevet français N° 87.15 069. Ce sont les galets 30 et 31 qui assurent le déplacement par roulement du support 25 ou 26 tandis que les autres assurent le guidage correct de ce support en évitant la mise en travers et le blocage de la poutre 19 ou 20 entre les deux traverses d'extrémité 22, 23. De plus, chaque poutre 19, 20 comporte un arbre d'actionnement longitudinal 38, 39, respectivement, couplé à des moyens d'entraînement en rotation solidaires desdites poutres. Ainsi, dans l'exemple des figures 1, 3, 4 et 5, l'arbre 38 porté par la poutre 19 est entraîné par un moteur hydraulique 40 monté à l'extrémité avant de cette poutre tandis que, de façon analogue, l'arbre 39 porté par la poutre 20 est entraîné par un moteur hydraulique 41 monté à l'extrémité avant de cette poutre. L'arbre 38 est muni de deux pignons 42a, 42b au voisinage de ses extrémités avant et arrière, respectivement, tandis que l'arbre 39 est muni de deux pignons 43a, 43b au voisinage de ses extrémités avant et arrière, respectivement. Les pignons 42a et 43a situés du côté de la traverse d'extrémité avant 22 sont en prise avec une même crémaillère 45 solidaire de cette traverse 22. De façon analogue, les pignons 42b, 43b situés du côté de la traverse d'extrémité arrière 23 sont en prise avec une autre crémaillère 46 solidaire de cette traverse 23. Ainsi, les crémaillères sont des éléments communs aux moyens d'entraînement en rotation des deux arbres et par conséquent des deux poutres. Les moteurs hydrauliques 40, 41 sont alimentés en fluide hydraulique grâce à des conduits flexibles reliés à une source de pression hydraulique non représentée.

Comme cela ressort des dessins, à l'arrière du véhicule, la traverse 23 est sensiblement au même niveau que les poutres longitudinales 19 et 20 et la crémaillère 46 est logée à l'intérieur de la traverse d'extrémité 23 en étant fixée sur une aile horizontale inférieure de celle-ci. En revanche, le support mobile 25 de chaque poutre, à l'avant du véhicule, s'étend en-dessous de ladite poutre de façon que l'extrémité correspondante de la poutre soit dégagée et au-dessus de la traverse d'extrémité 22, voisine. Les moyens d'entraînement en rotation des arbres 38, 39 sont ainsi au moins en partie installés à cette extrémité de poutre au-dessus de la traverse d'extrémité 22. Plus précisément, les moteurs hydrauliques 40 et 41, entraînant les arbres 38 et 39 s'étendent ainsi au-dessus de la traverse 22. La crémaillère 45 est fixée à la face horizontale supérieure de cette traverse.

Comme on le verra plus loin, dans une version mécanique à entraînement manuel, un réducteur remplace chaque moteur hydraulique et se déplace au-dessus de la traverse 22.

Chaque poutre 19 ou 20 est essentiellement constituée de l'assemblage côte à côte d'un tube à section rectangulaire 48 et d'un élément profilé 50, à profil en C ouvert latéralement vers l'extérieur. Cet élément profilé 50 abrite un enrouleur de bâche latéral, c'est-à-dire plus particulièrement un arbre horizontal 18 s'étendant sur sensiblement toute la longueur de la poutre. Chaque arbre 18 est entraîné par un moteur hydraulique 55 également monté à l'extrémité de la poutre et s'étendant au-dessus de la traverse 22.

De plus, le support de toit 17 comprend des traverses intermédiaires 60 articulées par leurs extrémités respectives aux deux poutres longitudinales 19, 20. Chaque traverse intermédiaire comporte une articulation médiane 61 permettant son repliement pendant un déplacement d'au moins l'une des deux poutres. Cet agencement, visible sur la figure 1, est conforme à ce qui est décrit dans la demande de brevet français N° 87.15 069. Selon une caractéristique supplémentaire avantageuse, toutes les traverses 60 sont aussi articulées à des longerons 62 s'étendant parallèlement aux poutres longitudinales 19, 20. Cet assemblage de traverses intermédiaires et longerons assure un repliement plus fiable du support de toit.

Le fonctionnement découle avec évidence de la description qui précède. Selon les circonstances, c'est-à-dire selon l'emplacement du quai de chargement et des moyens de levage, l'utilisateur décide de dégager la partie supérieure du véhicule en enroulant les bâches latérales autour des arbres 18 et en déplaçant l'une ou l'autre des poutres longitudinales 19 ou 20, ce qui entraîne le repliement de l'ensemble des traverses intermédiaires et longerons, dégageant ainsi toute la partie supérieure du véhicule. Dans des cas particuliers, les deux poutres longitudinales peuvent aussi être déplacées vers le milieu du véhicule.

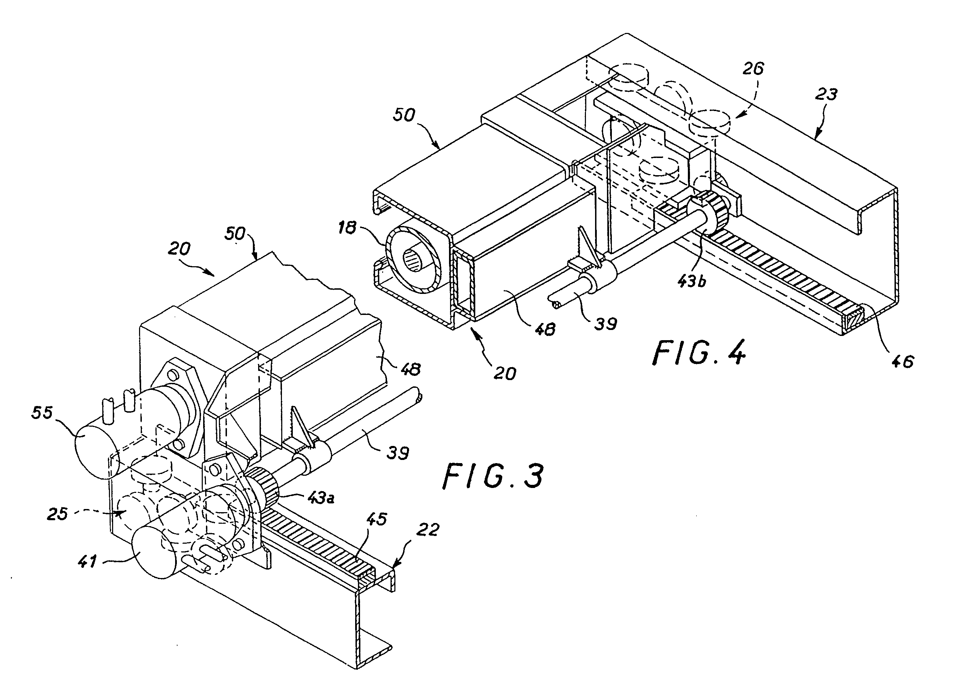

En se reportant plus particulièrement à la figure 2, on a schématisé une variante possible, à actionnement manuel, dans laquelle les moteurs hydrauliques sont remplacés par des systèmes de transmission mécanique actionnés par manivelle. Plus précisément, au niveau de la paroi avant 13, l'arbre d'actionnement de chaque poutre est couplé à un mécanisme d'entraînement manuel comprenant un réducteur 40a, 41a (remplaçant les moteurs hydrauliques 40 et 41) installé sur la poutre correspondante et une tringlerie d'entraînement télescopique 65 reliant ledit réducteur à un ensemble de pignons 66 et manivelle 67 situé en partie basse du véhicule, a hauteur d'homme. La tringlerie télescopique 65 est formée de deux tubes a section carrée engagés l'un dans l'autre pour pouvoir former une transmission de longueur variable articulée entre l'ensemble de pignons 66 et le réducteur 40 ou 41. Le même agencement peut se substituer aux moteurs hydrauliques 55 commandant l'enroulement des bâches.

## Revendications

1- Véhicule de transport comportant une armature de bache pour former un espace couvert, cette armature comprenant notamment un support de toit muni de deux poutres longitudinales (19, 20) parallèles et de deux traverses d'extrémité (22, 23), respectivement avant et arrière, caractérisé en ce que les deux poutres longitudinales sont montées avec possibilité de déplacement le long desdites traverses en restant parallèles à elles-mêmes, en ce que chaque poutre comporte à cet effet, à chacune de ses extrémités, un support mobile (25, 26) formant chariot ou analogue, assujetti à se déplacer dans un rail creux solidaire de la traverse correspondante, en ce que chaque poutre comporte un arbre d'actionnement longitudinal (38, 39), couplé à des moyens d'entraînement en rotation, muni de deux pignons (42, 43) au voisinage de ses extrémités et en ce que les pignons des extrémités des deux arbres situés du côté d'une même traverse d'extrémité sont en prise avec une même crémaillère (45, 46) transversale solidaire de cette traverse.

2- Véhicule de transport selon la revendication 1, caractérisé en ce que ledit arbre d'actionnement de chaque poutre est couplé à un mécanisme d'entraînement manuel (65, 66, 40a) comprenant un réducteur installé sur la poutre et une tringlerie d'entraînement télescopique reliant ledit réducteur à un ensemble de pignons et manivelle situé en partie basse du véhicule.

3- Véhicule de transport selon la revendication 1, caracterisé en ce que ledit arbre d'actionnement de chaque poutre est couplé à un moteur hydraulique (40, 41) installé sur la poutre et alimenté en fluide hydraulique par des conduits flexibles.

4- Véhicule de transport selon l'une des revendications précédentes, caractérisé en ce que chaque poutre longitudinale (19, 20) comporte un élément profilé à profil en C (50) ouvert latéralement vers l'extérieur et en ce que cet élément abrite un enrouleur de bache latérale (18), s'étendant sur sensiblement toute la longueur de ladite poutre.

5- Véhicule de transport selon l'une des revendications précédentes, comprenant des traverses intermédiaires (60) articulées par leurs extrémités respectives aux deux poutres longitudinales, chaque traverse intermédiaire comportant une articulation médiane (61) permettant son repliement pendant un déplacement d'au moins l'une des deux poutres, caractérisé en ce que toutes les traverses sont articulées à des longerons (62) s'étendant parallèlement aux poutres longitudinales.

6- Véhicule de transport selon l'une des revendications précédentes, caractérisé en ce que, à l'une des extrémités dudit véhicule, le support mobile (25) de chaque poutre longitudinale s'étend en-dessous de ladite poutre de façon que l'extrémité correspondante de la poutre soit dégagée et au-dessus de la traverse d'extrémité (22) voisine et en ce que les moyens d'entraînement en rotation précités sont au moins en partie installés à cette extrémité de poutre, au-dessus de ladite traverse d'extrémité voisine.

FIG.1

FIG.2

FIG.5

EP 0 429 356 A1

FIG. 4

FIG. 3

**Office européen
des brevets**

**RAPPORT DE RECHERCHE
EUROPEENNE**

Numéro de la demande

**EP 90 40 3279**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| D,Y,A | FR-A-2 622 518  (J.LIBNER)<br>* le document en entier *<br>— — — | 1,2-5 | B 60<br>P 7/04<br>B 60 J 7/06 |
| Y,A | PATENT ABSTRACTS OF JAPAN vol. 10, no. 270 (M-517)(2326) 13 septembre 1986,<br>& JP-A-61 092919 (FUSO JIDOSHA KOGYO K.K.) 10 mai 1986,<br>* le document en entier *<br>— — — | 1,3 | |
| A | US-A-2 510 307  (E.DANIELS)<br>* le document en entier *<br>— — — | 1 | |
| A | FR-A-2 536 709  (R.ANGLADE)<br>* le document en entier *<br>— — — | 1 | |
| A | FR-A-2 024 746  (LATI)<br>* le document en entier *<br>— — — | 1 | |
| A | US-A-4 518 193  (M.HEIDER)<br>* le document en entier *<br>— — — — — | 1 | |

DOMAINES TECHNIQUES
RECHERCHES (Int. Cl.5)

B 60 P
B 60 J

Le présent rapport de recherche a été établi pour toutes les revendications

| Lieu de la recherche | Date d'achèvement de la recherche | Examinateur |
|---|---|---|
| La Haye | 23 février 91 | CZAJKOWSKI A.R. |